(19) Europäisches Patentamt

European Patent Office

Office européen des brevets

(11) Publication number: **0 203 038**
**B1**

# EUROPEAN PATENT SPECIFICATION

(45) Date of publication of the patent specification:
26.07.89

(21) Application number: **86830116.9**

(22) Date of filing: **09.05.86**

(51) Int. Cl.⁴: **B 27 F 1/08**

(54) A tenoning machine.

(30) Priority: **15.05.85 IT 343985**

(43) Date of publication of application:
**26.11.86 Bulletin 86/48**

(45) Publication of the grant of the patent:
**26.07.89 Bulletin 89/30**

(84) Designated Contracting States:
**AT BE CH DE FR GB LI NL SE**

(56) References cited:
**DE-A- 2 419 938**
**DE-A- 2 907 304**

(73) Proprietor: **SCM S.p.A., Via Emilia, 71, I-47037 Rimini (Forlì) (IT)**

(72) Inventor: **Gemmani, Giuseppe, Via Marecchiese, 20, I-47037 Rimini (Froli) (IT)**

(74) Representative: **Lanzoni, Luciano, c/o BUGNION S.p.A. Via Farini, 37, I-40124 Bologna (IT)**

## Description

The invention described herein relates to a woodworking machine of the type for cutting tenons.

In the art field of woodworking machinery, the prior art embraces machines by means of which tenons may be cut in the members of window and door frames. Machines of the type consist of a cross cut saw, and a vertical axis tenon cutter, arranged one following the other alongside a vertical fence.

Workpieces cut by machines of the type are generally straight lengths of wood, fed in by hand initially and then turned about, likewise by hand, in order to permit of cutting the remaining end.

Semi-automatic tenoning machines recently made available to the trade are designed such that the only manual operation required is that of clamping single workpieces to a carriage. A machine of the type employs two cross cut saws, which are separated by the tenon cutter, and an outgoing conveyor which serves to transfer the tenoned members to a conventional planing machine. The carriage in such a machine is fitted with clamping means that can be rotated about their vertical axis while holding a workpiece fast. The work cycle comprises the steps of

a) clamping a workpiece to the carriage at a point mid-way along its length, the carriage being positioned at its farthest distance from the conveyor,

b) traversing the carriage toward the conveyor such that the work engages one of the cross cut saws, the first only being operative at this stage, and the tenon cutter,

c) turning the workpiece through 180°, avoiding contact with the second cross cut saw,

d) establishing the ultimate length of the tenoned member, and traversing the carriage in the opposite direction such that the remaining end of the workpiece engages the second cross cut saw and the tenon cutter.

Notwithstanding the semi-automatic operation which is provided, a tenoning machine thus embodied is beset by several drawbacks; for instance, the machine is long and complex, two saws being employed, and what is more, the workpiece engages the tenon cutter from two different directions.

By contrast, it is a fact known to those skilled in the art, that a rotary tool will work efficiently and durably only if engaged by workpiece in exactly the same fashion each time, namely, with the work striking into the cut; this is especially true in the case of timber.

In a machine of the type in question, the tool will rotate in the opposite direction to the workpiece feed during one or other work stroke only, whereas during the remaining stroke, rotation of the tool and feed of the workpiece follow the same direction; the result is that the tool overheats and is subject to early wear, whilst the work may be scratched.

In addition to the above drawbacks, it will be clear that the cutting guard can not be positioned to best effect.

Accordingly, the object of the invention described herein is that of overcoming the drawbacks mentioned above.

The stated object is achieved with a machine and a method according to the invention, as characterized in the claims appended, which brings workpieces to be tenoned into contact with the rotary blade of the cross cut saw and the rotary cutter in correct fashion, by virtue of the fact that the work is tenoned first at one end, then turned about and returned to the position accupied at the start of the cycle, before being tenoned at the remaining end.

Advantages gained with the invention described herein consist essentially in greater operating speed, and in the certain knowledge that opposite members making up a given frame will be perfectly identical every time, as at least two members are tenoned in any one work cycle, so as to provide the two rails or stiles of a single frame. Cycle time is thus cut by at least half compared to the most recent prior art machines, an advantage made possible by incorporation of a run-out which supplies the downstream planing machine with one tenoned member at a time. Such a run-out is doubly advantageous, since it enables the carriage to traverse back and pick up at least two further workpieces immediately after each knockout of tenoned members onto the conveyor.

Another advantage offered by a tenoning machine according to the invention is that workpieces can be cut to precise dimensions without the need for repeated measurement by hand. The use of programmable numerical control media permits of establishing the ultimate length of the trimmed workpiece, and clamping the work to the carriage despite the fact that the carriage position may be other than as required to obtain the ultimate length selected, since the control facility will re-position the clamping means in relation to the cross cut saw prior to the second work stroke, according to the distance of the saw blade from the carriage.

A further advantage of the tenoning machine according to the invention, which stems from the use of programmable numerical control, is that of increased operating speed i.e., the carriage can be traversed at the requisite speed when feeding work into the cross cut saw or tenon cutter, and traversed at far greater speed during other movement, positioning between the cross cut saw and tenon cutter included.

An embodiment of the invention will now be described in detail, by way of example, with the aid of the accompanying drawings, in which:

fig. 1 is the schematic representation of a tenoning machine according to the invention, viewed in plan, in which the carriage is drawn in continuous line to illustrate the entry point position, and in broken line to indicate the exit point position;

fig. 2 is the schematic representation of a detail of the machine, viewed across II-II in fig. 1;

fig. 3 is a perspective of the detail of fig. 2, showing a pair of frame members, the matching rails (or stiles) of a fixture, clamped in readiness for cutting.

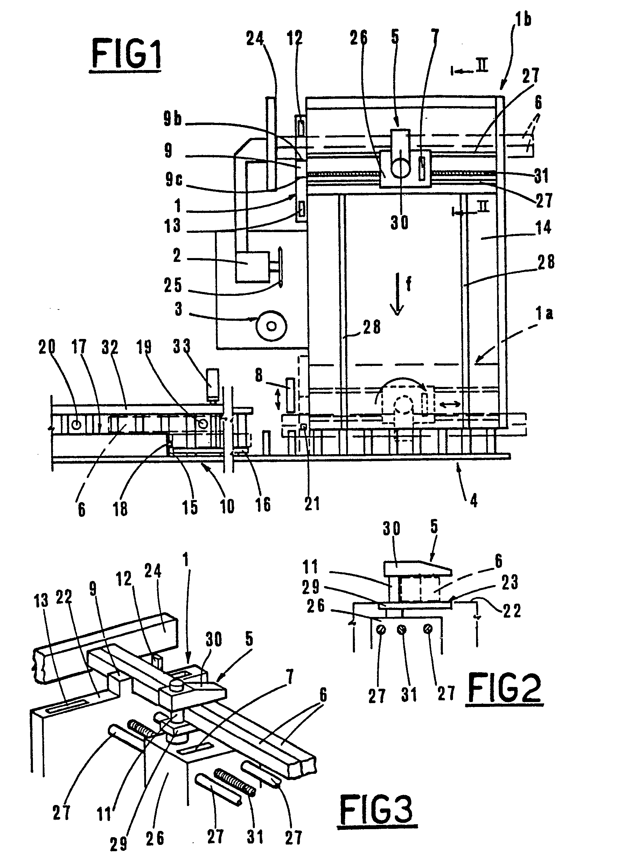

Referring to fig. 1, a tenoning machine consists of a carriage 1, at least one cross cut saw 2 and a tenon cutter 3, and a conveyer 4.

The carriage 1 is traversed on parallel ways 28 supported by the machine framework 14, between an entry point (denoted 1b) and an exit point (denoted

1a), carrying workpieces 6 in the direction of the conveyor 4; in traversing thus, the carriage 1 passes in front of the cross cut saw 2 and tenon cutter 3.

The carriage 1 is provided with clamping means 5 that grip the workpiece 6 to be tenoned, and can be rotated about their vertical axis; such means 5 may be vice-like in embodiment, incorporating a bottom jaw 29 rotatable about a vertical axis and affording a rest 23 the level of which is fixed in relation to the blade of the tenon cutter 3, and a top jaw 30, integral with a vertical pillar 11 capable of longitudinal movement, and rotatable as one with the bottom jaw 29.

The conveyor 4 is disposed at right angles to the carriage ways 28 so that in taking receipt of the workpieces 6, these will be aligned longitudinally with the conveyor's direction of movement; the conveyor 4 itself is connected with a downstream runout 10.

The bottom and top jaws 29 and 30 of the clamping means 5 are of proportions such as to accommodate at least one pair of matching frame members making up a fixture, or workpiece 6.

The clamping means 5 are mounted to a second carriage 26, through which a pair of rails 27 and a lead screw 31 pass freely and in threaded engagement, respectively, disposed parallel one with the other and at right angles to the ways 28 along which the first carriage 1 is traversed. The rails 27 and the lead screws 31 traverse as one with the first carriage 1, the lead screw being rotated by a motor (not illustrated) interlocked to programmable numerical control media (likewise not illustrated), to which the motor driving the first carriage 1 is also interlocked.

7 denotes a knockout actuator associated with the second carriage 26, which is designed to operate in conjunction with a second knockout actuator 8 when the first carriage 1 draws alongside the exit point, in order to tranfer the workpieces i.e. the pair of tenoned members 6, onto the conveyor 4.

The end of the carriage 1 which passes in front of the cross cut saw 2 and the tenon cutter 3 carries a work-rest 22 the surface of which lies in the same plane as that of the rest 23 afforded by the bottom jaw 29 of the clamping means 5.

9 denotes a double-sided stop projecting upward from the central part of the work-rest 22, which is disposed in exact transverse alignment, relative to the direction f in which the carriage 1 is traversed, with the vertical pillar 11 of the clamping means 5.

The work-rest 22 incorporates two identical clamps 12 and 13 located one at either end, disposed symmetrically in relation to the double-sided stop 9 and designed to operate in conjunction therewith in holding fast the workpieces 6 gripped by the clamping means 5. In the embodiment shown, the clamps 12 and 13 are of a type which fold away following use, as are the knockout actuaters 7 and 8 also; in the drawings, 13 denotes the clamp nearest the conveyor 4, and 12 denotes the clamp farthest therefrom.

24 denotes a vertical stop offered by the framework 14 at the entry point of the machine, which is fixed in relation to the blade 25 of the cross cut saw 2 and distanced farther from the clamping means 5 than the blade 25 by an amount equal to the waste generally trimmed from each butt end of the workpiece 6.

The run-out 10 is composed of a detent 15, disposed at right angles to the directions of movement of the conveyor 4, with which it connects, and an alignment mechanism 16 and a fence 32 disposed parallel with the direction of movement of the conveyor. The distance separating the detent 15 from the fence 32 is marginally greater than the transverse dimension of a single workpiece 6, and the two components thus create a channel 17 along which one workpiece only may proceed at a time. The alignment mechanism 16 takes the form of a vertical plate, and is shifted through a path parallel with itself by an actuator, a fluid power cylinder 33 in the embodiment shown, toward the fence 32; a workpiece 6 is thus urged into contact with the fence 32 at each stroke, the reason for which will become evident.

A tenoning machine according to the invention will incorporate other components, amongst which are: a transducer 21 which detects proximity of the workpieces 6 knocked out onto the conveyor 4 at the exit point of the machine; a transducer 18 which detects proximity of a workpiece 6 brought into contact with the detent 15; a transducer 19 occupying substantially the same plane as that occupied by the detent 15, which detects proximity of a workpiece 6 in contact with the fence 32; and a transducer 20 detecting the vacant or busy state of the channel 17.

Operating of a tenoning machine according to the invention is as follows.

Assuming the machine to be positioned for the start of a work cycle, as indicated by the continuous line drawing of fig. 1, the ultimate length of the single member cut from each workpiece 6 is entered by way of the numerical control, whereupon the second carriage 26 will be positioned, automatically, by the control media. This being accomplished, a pair of workpieces 6 can be placed on the surface created by the work-rest 22 and the bottom jaw 29 of the clamping means, care being taken to locate the butt ends of the workpieces 6 against the stop 24, and to urge the workpiece firmly against the vertical pillar 11 of the clamping means 5 and the relative surface 9b of the double-sided stop 9.

The machine is now set in motion, producing operation of the clamping means 5, which grip the pair of workpieces 6 between their top and bottom jaws 30 and 29, and of the work-rest clamp 12, which holds the ends of the workpieces fast against the double-sided stop 9. The carriage 1 operates automatically at this juncture, and begins traversing toward the exit point 1a, hence toward the cross cut saw 2 and the tenon cutter 3.

As the carriage 1 traverses, the ends of the workpieces 6 are first trimmed by the cross cut saw 2, following which the tenon is formed by the cutter 3. The moment that both workpieces 6 traverse beyond the tenon cutter 3, the second carriage is distanced from the sawblade 25, the work-rest clamp 12 is released, and the clamping means 5 and workpieces are turned clockwise through 180° as shown in fig. 1. With this half revolution completed, the workpieces 6 will be located once more against the double-sided stop 9, in this instance against the surface 9c directed toward the conveyor 4, and held fast by subsequent engagement of the relative clamp 13. At the same time as the clamping means 5 are turned through 180°, the carriage is traversed at high speed toward the entry point, where the second carriage 26 is made to approach the vertical stop 24 through a distance that will depend upon the ultimate length of the trimmed workpiece 6 and upon the distance which separated the clamping means 5 from the blade 25 of the cross cut saw 2 during the previous cutting stroke.

The carriage 1 is now taken through a second work stroke, this time continuing through to the machine exit point, where the work-rest clamp 13 and the clamping means 5 are released and the knockout actuators 7 and 8 push the pair of workpieces 6 onto the conveyor 4; the carriage 1 then returns toward the entry point at high speed. The workpieces 6 knocked out first excite the transducer denoted 21, which in turn triggers operation of the conveyor 4, and then proceed toward the runout 10, which at this stage is motionless with the alignment mechanism 16 fully distanced from the fence 32. The alignment mechanism will operate the instant that the workpieces 6 are brought into contact with the detent 15 and excite the relative transducer 18, and approaches the fence 32 to the point where one workpiece 6 makes contact with the fence and excites the next transducer 19.

At this stage, the workpiece 6 exciting the transducer 19 in question is aligned with the channel 17, and can be propelled therealong by the conveyor 4, which is still runing. The second workpiece 6 of the pair remains butted against the detent 15 due to the motion of the conveyor 4, a situation logically ensuring that the conveyor remains operative, until such time as the first workpiece 6 passes beyond the transducer denoted 20, bringing about its disexcitation; the signal from this transducer 20 triggers operation of the alignment mechanism 16 once again, in order to bring the second workpiece 6 into alignment with the channel 17. Once both transducers 20 and 18 have been disexcited due to the total absence of workpieces 6 from the channel 17, the conveyor 4 shuts off and remains motionless until subsequent reexcitation of the relative transducer 21, and the alignment mechanism 16 draws away from the fence 32 to afford acces to the next pair of workpieces 6.

A tenoning machine according to the invention is described above assuming that the clamping means 5 are to accomodate one pair of workpieces 6, though such means 5 could be made to accomodate more than just the one pair. In this instance, operation of the machine will remain the same; embodiment of the alignment mechanism 16 likewise presents no problem, since the mechanism is made to approach the fence 32 each time through a distance equal to the transverse dimension of the single workpiece 6, a quantity that remains unaffected by the number of items that may happen to be gripped by the clamping means 5.

## Claims

1. A tenoning machine of the type comprising:
— a feed carriage (1) for movement horizontally from an entry point through work stations equipped with a cross cut saw (2) and a tenon cutter (3), toward an exit point alongside a rectilinear planing machine feed conveyor (4) disposed at right angles to the direction (f) in which the carriage (1) is traversed, with which is associated a run-out (10) designed to feed one workpiece (6) at a time to the planing machine;
— clamping means (5) fitted to the carriage (1) at a position substantially central when seen in the direction (f) in which the carriage is traversed, and rotatable around a vertical axis, said clamping means being provided to grip at least one pair of workpieces (6) to be tenoned;
characterized in that it further comprises:
— a single cross cut saw (2) and a single tenoning cutter (3) disposed in a fixed location one with respect to the other and in the above order along said feed direction (f);
— said clamping means (5) being provided with remote controlled means for traversing said clamping means together with said workpieces (6), in a horizontal direction perpendicular to said feed direction (f), from and toward vertically extending stop means (24) fixedly disposed in relation to the cross cut saw blade (25) in a plane parallel to said feed direction (f), and located at a greater lateral distance from said clamping means (5) than the blade (25) of the cross cut saw (2);
— a work-rest (22), disposed on the carriage (1), coplanarly with respect to a rest (23) of said clamping means (5), located between the clamping means (5) and said cross cut saw (2) and tenoning cutter (3); and
— a numerical control unit for said feed, rotational and traversing movements.

2. Tenoning machine as in claim 1, characterized in that said work-rest (22) comprises a double-sided stop (9) projecting upwards from the work-rest (22) and aligned, perpendicularly to the direction (f), with a vertical pillar (11) of the clamping means (5), against which said work-pieces (6) are urged into contact; and two identical clamps (12, 13) disposed symmetrically either side of the double-sided stop (9) and in parallel alignment with the direction (f), which operate in conjunction with the stop (9) to the end of holding fast the workpieces (6); and wherein the clamping means (5) rotate around the axis of the vertical pillar (11).

3. Tenoning machine as in claim 1 or 2, characterized in that said clamping means (5) are mounted to a second carriage (26) movable on rails (27) integral with the first carriage (1) through a path perpendicular to said directions (f), said second carriage (26) being provided with a first knockout actuator (7) able to eject the workpieces (6) onto the conveyor (4), and wherein the first knockout actuator (7) is located at the side of the clamping means opposite that on which the cross cut saw (2) and tenon cutter (3) are located, said first actuator (7) operating in conjunction with a second knockout actuator (8) fixed to the machine framework (14) at the exit point, whenever the carriage (1) is brought alongside the exit point.

4. Tenoning machine as in claim 1, characterized in that it comprises a run-out (10), associated with the conveyor (4) and designed to feed one workpiece (6) at a time to a planing machine, said run-out (10) comprising a detent (15) disposed at right angles to the conveyor (4) and designed to combine with a fence (32), disposed parallel to the conveyor (4), in creating a channel (17) the width of which is marginally greater than the transverse dimension of a single workpiece (6); an alignment mechanism (16) disposed parallel with the fence (32) and designed to urge at least one workpiece (6), currently abutting with the detent (15), through a path parallel with itself into alignment with the channel (17); and transducers (18, 19, 20) the respective purposes of which are to detect proximity of the workpieces (6) brought into contact with the detent (15) and conveyed through the channel (17), to trigger operation of the alignment mechanism (16) and to shut off the conveyor (4); and wherein the conveyor (4) is set in motion by at least one further transducer (21) which detects the proximity of a pair of workpieces (6) occupying the stretch of conveyor (4) alongside the machine exit point.

5. A method for tenoning at least one pair of workpieces constituting the matching frame members of a fixture, comprising the steps of:

a) simultaneous clamping at least two workpieces (6) in an entry point of the machine;

b) simultaneous cutting and tenoning of one end of each of said at least two matched workpieces (6), inseparably associated for the purpose and fed along a feed direction (f) perpendicularly disposed with respect to the longitudinal axis of said workpieces;

c) rotation of the two matched workpieces (6) as one through 180°;

d) simultaneous cutting, to the requisite size, and tenoning, of the remaining ends of the two matched workpieces;

e) opening the clamping means and feeding of the two matched workpieces into a run-out (10) designed to supply workpieces one at a time to a machine carrying out subsequent planing operations,

characterized in that it comprises after said step b) the following step:

f) distancing of the clamping means of said workpieces from tenoning and cutting devices along a direction perpendicular to said feed direction (f);

and after the step c) the following steps:

g) returning of said clamping means toward the machine entry point with an opposite direction with respect to said feed direction (f);

h) feeding of said workpieces (6) past the cutting and tenoning devices.

**Patentansprüche**

1. Zapfenschneidmaschine vom Typ enthaltend:

— einen Zuführschlitten (1), der sich horizontal von einer Eintrittsstelle durch mit einer Ablängsäge (2) und einem Zapfenschneider (3) versehene Arbeitsstationen zu einer Austrittsstelle längsseits eines gradlinigen Beschickungsförderers (4) für eine Hobelmaschine bewegt, die rechtwinklig zu der Vorschubrichtung (f) des Schlittens (1) angeordnet ist, letzterer verbunden mit einem Auslaufgang (10), der dazu bestimmt ist, jeweils ein Werkstück (6) der Hobelmaschine zuzuführen;

— eine Spannvorrichtung (5), die an dem Schlitten (1) in einer beim Betrachten der Vorschubrichtung des Schlittens selbst im wesentlichen mittleren Position befestigt und um eine vertikale Achse drehbar ist, wobei die genannte Spannvorrichtung dazu vorgesehen ist, wenigstens ein Paar von zu verzapfenden Werkstücken (6) zu greifen, dadurch gekennzeichnet, dass sie weiter enthält:

— eine einzige Ablängsäge (2) und einen einzigen Zapfenschneider (3), die im Verhältnis zueinander an einer festen Stelle und längs der genannten Vorschubrichtung (f) angeordnet sind, wobei die genannte Spannvorrichtung (5) mit einer Fernsteuerung für den Vorlauf der genannten Spannvorrichtung zusammen mit dem genannten Werkstück (6) in einer horizontalen Richtung lotrecht zu der genannten Vorschubrichtung (f) versehen ist, und zwar von und zu einem sich vertikal erstreckenden Anschlagmittel (24), das im Verhältnis zu dem Ablängsägeblatt (25) auf einer zu der genannten Vorschubrichtung (f) parallel verlaufenden Ebene fest angeordnet und in einem grösseren seitlichen Abstand von der genannten Spannvorrichtung (5) plaziert ist als das Blatt (25) der Ablängsäge (2);

— ein Auflager (22), das auf dem Schlitten (1) koplanar zu einem Auflager (23) der genannten Spannvorrichtung (5) angeordnet ist und sich zwischen der Spannvorrichtung (5) und der genannten Ablängsäge (2) und dem Zapfenschneider (3) befindet;

— sowie eine numerische Steuerung für die genannten Zuführ-, Dreh- und Vorschubbewegungen.

2. Zapfenschneidmaschine nach Patentanspruch 1, dadurch gekennzeichnet, dass das genannte Auflager (22) einen doppelseitigen Anschlag (9) enthält, der sich von dem Auflager (22) aus nach oben erstreckt und lotrecht zu der Richtung (f) einer vertikalen Säule (11) der Spannvorrichtung (5) ausgerichtet ist, an der die genannten Werkstücke (6) anliegen, sowie zwei gleiche Klemmen (12, 13), die symmetrisch zu jeder Seite des doppelseitigen Anschlags (9) angeordnet und parallel zu der Richtung (f) ausgerichtet sind und mit dem Anschlag (9) zusammenarbeiten, um die Werkstücke (6) festzuhalten, und danach, dass sich die Spannvorrichtung (5) um die Achse der vertikalen Säule (11) dreht.

3. Zapfenschneidmaschine nach Patentanspruch 1 oder 2, dadurch gekennzeichnet, dass die genannte Spannvorrichtung (5) auf einem zweiten Schlitten (26) montiert ist, der auf mit dem ersten Schlitten (1) in einem Stück gearbeiteten Schienen (27) in einer zu der genannten Richtung (f) rechtwinklig verlaufenden Richtung verfahrbar ist, wobei der genannte Schlitten (26) mit einer ersten Auswerfvorrichtung (7) versehen ist, die dazu dient, die Werkstücke (6) auf den Förderer (4) zu werfen, und dadurch, dass die erste Auswerfvorrichtung (7) auf der Seite der Spannvorrichtung angeordnet ist, die der Seite mit der Ablängsäge (2) und dem Zapfenschneider (3) gegenüberliegt, wobei die genannte erste Auswerfvorrichtung (7) mit einer zweiten Auswerfvorrichtung (8) zusammenarbeitet, die an dem Maschinenrahmen (14) dicht an der Austrittsstelle befestigt ist, und zwar immer, wenn sich der Schlitten (1) längs der Austrittsstelle befindet.

4. Zapfenschneidmaschine nach Patentanspruch 1, dadurch gekennzeichnet, dass sie einen Auslaufgang (10) enthält, der mit dem Förderer (4) verbunden und dazu bestimmt ist, jeweils ein Werkstück (6) einer Hobelmaschine zuzuführen, wobei der genannte Auslaufgang (10) einen Anschlag (15) enthält, der rechtwinklig zu dem Förderer (4) angeordnet und dazu bestimmt ist, zusammen mit einer Führungsleiste (32) parallel zu dem Förderer (4) einen Kanal (17) von einer Breite zu bilden, die etwas grösser ist als die Querabmessung eines einzelnen Werkstückes (6); einen Ausrichtmechanismus (16), parallel zu der Führungsleiste (32) angeordnet und dazu bestimmt, wenigstens ein Werkstück (6), das gerade an dem Anschlag (15) anliegt, in einer zu sich selbst parallelverlaufenden Bahn zu dem Kanal (17) auszurichten; sowie Wandler (18, 19, 20), deren jeweilige Aufgabe es ist, die Annäherung des mit dem Anschlag (15) in Berührung gebrachten und dadurch den Kanal (17) beförderten Werkstückes (6) zu erfassen, den Betrieb des Ausrichtmechanism (16) auszulösen und den Förderer (4) auszuschalten, und dadurch, dass der Föderer (4) durch wenigstens einen weiteren Wandler (21) in Bewegung gesetzt wird, der die Annäherung eines Paares von Werkstücken (6) erfasst, das sich längsseits der Austrittsstelle der Maschine auf dem Fördere (4) befindet.

5. Verfahren zum Zapfenschneiden an wenigstens einem Paar die zusammenpassenden Teile eines Rahmens bildenden Werkstücke (6), enthaltend folgende Phasen:

a) gleichzeitiges Einspannen von wenigstens zwei Werkstücken (6) an einer Eintrittsstelle der Maschine;

b) gleichzeitiges Ablängen und Zapfenschneiden an einem Ende von wenigstens jedem der genannten beiden zusammenpassenden Werkstücke (6), die zu diesem Zweck untrennbar miteinander verbunden sind und entlang der rechtwinklig zu der Längsachse der genannten Werkstücke verlaufenden Vorschubrichtung (f) zugeführt werden;

c) Drehen der beiden zusammenpassenden Werkstücke (6) um 180°

d) gleichzeitiges Ablängen auf das gewünschte Mass und Zapfenschneiden der verbleibenden Enden der beiden zusammenpassenden Werkstücke;

e) Öffnen der Spannvorrichtung und Weiterleiten der beiden zusammenpassenden Werkstücke an einen Auslaufgang (10), der dazu bestimmt ist, die beiden Werkstücke einzeln einer Maschine zuzuführen, welche die anschliessenden Hobelarbeiten ausführt;

dadurch gekennzeichnet, dass es nach der genannten Phase b) folgende Phasen enthält:

f) Entfernen der Spannvorrichtung für die genannten Werkstücke von den Zapfenschneide- und Ablängvorrichtungen entlang einer rechtwinklig zu der genannten Vorschubrichtung (f) verlaufenden Richtung;

g) Rücklauf der genannten Spannvorrichtung zur Eintrittsstelle der Maschine in entgegengesetzter Richtung zu der genannten Vorschubrichtung (f);

h) Zuführen der genannten Werkstücke (6) zurück zu den Abläng- und Zapfenschneidvorrichtungen.

**Revendications**

1. Tenonneuse du type comportant:

— un chariot d'alimentation (1) mobile horizontalement depuis un poste d'entrée, à travers des stations de travail equipées d'une tronconneuse (2) et d'une machine à faconner les tenons (3), jusqu'à un poste de sortie le long d'un transporteur (4) rectiligne qui aliment une raboteuse, disposé perpendiculairement à la direction d'avance (f) du chalot (1), à ce transporteur étant associé un dispositif de débit (10) destiné à acheminer vers la raboteuse une seule pièce (6) à la fois;

— des moyens de serrage (5) fixés au charoit (1) en position sensiblement centrale si l'on considère la direction (f) d'avance du chariot, et susceptibles de tourner autour d'un axe vertical, lesdits moyens de serrage étant destinés à saisir au moins une paire de pièces (6) à tenonner;

caractérisée en ce qu'elle comporte en outre:

— une seule tronconneuse (2) et une seule machine à faconner les tenons (3) disposées à un emplacement fixe l'une par rapport à l'autre et selon l'ordre précité le long de ladite direction d'avance (f);

— lesdits moyens de serrage (5) étant pourvus de moyens commandés à distance pour le déplacement desdits moyens de serrage conjointement avec lesdites pièces (6) dans une direction horizontale, perpendiculaire à ladite direction d'avance (f), depuis et vers des moyens de butée (24) s'étendant verticalement et disposés de manière fixe par rapport à la lame (25) de la tronconneuse dans un plan parallèle à ladite direction d'avance (f) et situés à une distance latérale desdits moyens de serrage (5) plus élevée que la lame (25) de la tronconneuse (2);

— un élément d'appui (22) disposé sur le chariot (1) de manière qu'il est coplanaire par rapport à une surface d'appui (23) desdites moyens de serrage (5), et situé entre les moyens de serrage (5) et lesdites tronconneuse (2) et machine à faconner les tenons (3); et

— une unité à commande numérique, destinée à commander lesdits mouvements d'avance, de rotation et de translation.

2. Tenonneuse selon la revendication 1, caractérisée en ce que ledit élément d'appui (22) comporte une butée bilatérale (9) faisant saillie vers le haut depuis l'élément d'appui (22) et alignée, perpendiculaire à la direction (f), avec une tige verticale (11) des moyens de serrage (5), contre laquelle lesdites pièces (6) sont poussées en contact; et deux éléments de serrage identiques (12, 13) disposés symétriquement aux deux côtés de la butée bilatérale (9) et en alignement parallèle avec la direction (f), lesquels coopèrent avec la butée (9) dans le but de retenir de manière fixe la pièce (6); lesdites moyens de serrage (5) tournant autour de l'axe de la tige verticale (11).

3. Tenonneuse selon la revendication 1 ou 2, caractérisée en ce que lesdites moyens de serrage (5) sont portés par un deuxième chariot (26) mobile sur des rails (27) solidaires du premier chariot (1) le long d'un parcours perpendiculaire à ladite direction (f), ledit deuxième chariot (26) étant pourvu d'un premier organe éjecteur (7) destiné à éjecter les pièces (6) sur le transporteur (4), ledit premier organe éjecteur (7) étant situé sur le côté des moyens de serrage (5) opposé à celui le long duquel se trouvent la tronconneuse (2) et la machine à faconner les tenons (3), ledit premier organe éjecteur (7) étant susceptible de coopérer avec un deuxième organe éjecteur (8) fixé à la structure (14) de la machine au poste de sortie, chaque fois que ledit chariot (1) se trouve audit poste de sortie.

4. Tenonneuse selon la revendication 1, caractérisée en ce qu'elle comporte un dispositif de débit (10), associé au transporteur (4) et destiné à acheminer vers une raboteuse une seule pièce (6) à la fois, ledit dispositif de débit (10) comprenant une paroi d'arrêt (15) disposée perpendiculairement au transporteur (4) et destinée à se combiner avec une paroi de clôture (32), disposée parallèle au transporteur (4), de manière à former un canal (17) dont la largeur est légèrement supérieure à la dimension transversale d'une pièce individuelle (6); un mécanisme (16) disposé parallèle à la paroi de clôture (32) et destiné à pousser au moins une pièce (6), normalement en butée contre la paroi d'arrêt (15), le long d'un parcours parallèle à lui-même et en alignement avec le canal (17); et des détecteurs (18, 19, 20) ayant respectivement pour but de détecter la présence des pièces (6) en contact avec l'arrêt (15) et transportées le long du canal (17), de causer le déclenchement du mécanisme d'alignement (16) et de désactiver le transporteur (4); ledit transporteur (4) étant mis en mouvement par au moins un autre détecteur (21) susceptible de détecter la présence d'une paire de pièces (6) occupant la portion du transporteur (4) qui se trouve le long du poste de sortie de la machine.

5. Méthode pour le tenonnage d'au moins une paire de pièces formant les éléments opposés du cadre d'une fermeture de porte ou fenêtre, comportant les étapes de:

a) serrage simultané d'au moins deux pièces (6) en correspondance du poste d'entrée de la machine;

b) coupe simultanée et exécution de tenons sur l'une des extrémités de chacune desdites au moins deux pièces opposées formant un couple (6), à cet effet associées l'une à l'autre de manière inséparable et alimentées le long d'une direction d'avance (f) disposée perpendiculairement par rapport à l'axe longitudinal desdites pièces;

c) rotation de 180° de ladite paire de pièces opposées (6) formant un seul corps;

d) coupe simultanée, selon la revendication requise, et tenonnage des extrémités restantes des deux pièces opposées couplées;

e) ouverture des moyens de serrage et alimentation des deux pièces couplées sur un dispositif de débit (10) destiné à l'acheminement des pièces, une à la fois, vers une machine qui effectuera les subséquentes opérations de rabotage,

caractérisée en ce qu'elle comporte, après ladite étape b), l'étape suivante:

— éloigement des dispositifs de tenonnage et de tronconnage des moyens de serrage desdites pièces, le long d'une direction perpendiculaire à ladite direction d'avance (f);

et après l'étape c), les étapes suivantes:

g) retour des moyens de serrage vers le poste d'entrée de la machine suivant une direction opposée par rapport à ladite direction d'avance (f);

h) avance desdites pièces (6) jusqu'au-delà des dispositifs de tronconnage et de tenonnage.

# FIG1

# FIG2

# FIG3